# EUROPÄISCHE PATENTSCHRIFT

(11) **EP 2 108 229 B1**
(45) Veröffentlichungstag und Bekanntmachung des Hinweises auf die Patenterteilung: **15.09.2010**
(21) Anmeldenummer: 07858101.4
(22) Anmeldetag: 21.12.2007
(51) Int. Cl.: H04L 29/12, H04L 29/06

(54) **VERFAHREN UND KOMMUNIKATIONSANORDNUNG ZUM TRANSPORT VON MULTIMEDIADATEN ZWISCHEN IP-ENDGERÄTEN IN EINEM LOKALEN NETZ EINES WAN**
METHOD AND COMMUNICATION ARRANGEMENT FOR TRANSPORTING MULTIMEDIA DATA BETWEEN IP TERMINALS IN A LOCAL AREA NETWORK FOR A WAN
PROCÉDÉ ET ARRANGEMENT DE COMMUNICATION POUR TRANSPORTER DES DONNÉES MULTIMÉDIA ENTRE DES TERMINAUX IP DANS UN RÉSEAU LOCAL D'UN WAN

(30) Priorität: 09.01.2007 DE 102007001408
(43) Veröffentlichungstag der Anmeldung: 14.10.2009
(73) Patentinhaber: Gigaset Communications GmbH, 81379 München (DE)
(72) Erfinder: LENFORT, Christoph, 46399 Bocholt (DE); SCHULZ, Frank, 33415 Verl (DE)
(74) Vertreter: Michalski Hüttermann & Partner Patentanwälte
(86) Internationale Anmeldenummer: PCT/EP2007/064490
(87) Internationale Veröffentlichungsnummer: WO 2008/083919

(56) Entgegenhaltungen:
- SEN F AUDET F MEIJER C AOUN NORTEL NETWORKS S: "Identifying Intra-realm Calls using STUN <draft-sen-sipping-intrareal m-stun-00.txt>; draft-sen-sipping-intrarealm-stun-00.txt" IETF STANDARD-WORKING-DRAFT, INTERNET ENGINEERING TASK FORCE, IETF, CH, September 2002 (2002-09), XP015005211 ISSN: 0000-0004
- AOUN S SEN NORTEL NETWORKS C: "Identifying intra-realm calls and Avoiding media tromboning; draft-aoun-midcom-intrarealmcalls-00.txt" IETF STANDARD-WORKING-DRAFT, INTERNET ENGINEERING TASK FORCE, IETF, CH, 1. Januar 1900 (1900-01-01), XP015000106 ISSN: 0000-0004
- MELLOUK A ET AL: "A new methodology to adapt SIP Protocol for voice traffic transported over IP Network" TELECOMMUNICATIONS, 2005. AICT-ICIW '06. INTERNATIONAL CONFERENCE ON INTERNET AND WEB APPLICATIONS AND SERVICES/ADVANCED INTERNATIONAL CONFERENCE ON GUADELOPE, FRENCH CARIBBEAN 19-25 FEB. 2006, PISCATAWAY, NJ, USA,IEEE, 19. Februar 2006 (2006-02-19), Seiten 123-123, XP010898448 ISBN: 0-7695-2522-9

## Beschreibung

Ein Wide Area Network - in der Fachwelt als WAN bekannt und im weiteren mit WAN bezeichnet - erstreckt sich über einen größeren geographischen Bereich, in dem Local Area Networks bzw. lokale Netze - in der Fachwelt als LAN bekannt und im weiteren mit LAN bezeichnet - miteinander vernetzt sind. Auch ist zumindest ein Internetzugang vorgesehen. LAN's sind überwiegend als Busnetze wie beispielsweise durch Ethernets realisiert. Als Verbindungselemente zwischen den LAN's sind Zwischensysteme wie Router und Bridges angeordnet. Endgeräte in derartigen WAN's sind insbesondere paketorientierte Endgeräte wie Rechner, Personalcomputer oder IP-Telefone. Für die Adressierung im WAN werden vorzugsweise IP-orientierte Adressen wie IP-Adresse nach IPV4 oder IPV6 verwendet.

Für Sprachverbindungen über IP-Telefone in WAN's mit Internetprotokoll ist vorwiegend das SIP-Protokoll (Session Initiation Protocol) vorgesehen. Das SIP-Protokoll wurde im Hinblick auf das Internet entwickelt und orientiert sich an der Architektur gängiger Internet-Anwendungen. Dabei stand leichte Implementierbarkeit, Skalierbarkeit, Erweiterbarkeit und Flexibilität im Vordergrund. Das SIP-Protokoll kann benutzt werden, um beliebige Sessions bzw. Kommunikationsbeziehungen mit einem oder mehreren Teilnehmern zu verwalten. Dabei ist es nicht auf Internet-Telefonie beschränkt, sondern Sessions können beliebige Multimediaströme, Konferenzen, Computerspiele usw. sein. Das SIP-Protokoll stellte ein Transportprotokoll für ein Signalisierungsprotokoll dar, wobei beispielsweise in einem SDP (Session Description Protocol) die Signalisierungsinformation behandelt wird. Das SDP ist für die Verwaltung von Kommunikationssitzungen vorgesehen und wird beispielsweise zusammen mit dem SIP-Protokoll bei der IP-Telefonie eingesetzt. Bei Multimediaverbindungen ist beispielsweise als Transportprotokoll für die Multimediainformation das RTP (Real Time Protocol) vorgesehen.

Sind beispielsweise IP-Telefone einem LAN zugeordnet, das über einen Router mit dem Internet verbunden ist, wird eine Multimedia-Kommunikationsverbindung zwischen zwei IP-Telefonen des LAN mit Hilfe des SIP-Protokolls eingeleitet. Das SIP-Protokoll wird über den Router mit einem im Internet angeordneten Voice over IP-Server (VoIP-Server) mit SIP-Protokoll abgewickelt, wobei die Signalisierungsinformationen mit Hilfe des SDP-Protokolls behandelt werden. Im Rahmen der Signalisierung zwischen den beiden IP-Telefonen über den VoIP-Server wird mit Hilfe einer Anfrage des rufenden IP-Telefons an das gerufene IP-Telefon und einer Antwort des gerufenen IP-Telefons and das rufende IP-Telefon ermittelt, an welche Adresse die IP-Telefone anschließend die Sprach- bzw. Multimediadaten im LAN übermitteln sollen. In einem LAN eines WAN werden hierbei die WAN-Adresse und eine WAN-Portadresse des jeweiligen IP-Telefons angegeben, wobei als WAN-Adresse eine Internetadresse angegeben ist. Als WAN-Portdadresse wird diejenige Portnummer angegeben, die der Router dem jeweiligen Sprachdatenstrom des IP-Telefons im LAN zugeordnet hat. Die Zuordnung der WAN-Netzadresse und der WAN-Portadresse zum jeweiligen IP-Telefon wird mit Hilfe einer im Router vorhandenen NAT-Funktion (Network Address Transformation) durchgeführt. Da die NAT-Funktion im Router angeordnet ist, werden nach der Signalisierungsphase die Multimediadaten von einem IP-Endgerät mit der WAN-Adresse und der WAN-Portadresse an den Router übermittelt und nach einer der vorhergehend erläuterten Adressenkonvertierung werden die Multimediadaten mit der LAN-Adresse und LAN-Portadresse an das andere IP-Endgerät übermittelt. In der Praxis sind jedoch viele Router nicht geeignet, eine derartige Adressentransformation WAN-Netzadresse in LAN-Netzadresse und WAN-Portadresse in LAN-Portadresse für eine Kommunikation zwischen zwei IP-Endgeräten des gleichen lokalen Netzes durchzuführen.

Ein Verfahren, bei dem zwei lokale Endgeräte unter Verwendung lokaler Adressen Mediendaten austauschen, ist aus dem SIPPING Working Group Internet Draft, Sen et. al.: "Identifying Intra-Realm Calls using STUN" von September 2002 bekannt.

Die der Erfindung zugrunde liegende Aufgabe besteht darin, den Multimediainformationstransport zwischen IP-Endgeräten in einem lokalen Netz eines Wide Area Networks (WAN) zu verbessern. Die Aufgabe wird durch die Merkmale der Ansprüche 1 und 7 gelöst.

Ein wesentlicher Aspekt eines erfindungsgemäßen Verfahrens ist darin zu sehen, dass im Rahmen einer WAN-Signalisierung in einem Signalisierungsabschnitt zwischen dem ersten und zweiten Endgerät für eine Informationsübermittlung die WAN-Netzadressen und WAN-Portinformation ausgetauscht werden und nach einem Feststellen der das gleiche lokale Netz anzeigenden WAN-Netzadresse eine Wiederholung des Signalisierungsabschnitt eingeleitet wird. Bei der Wiederholung des Signalisierungsabschnitts werden die LAN-Netzadressen und LAN-Portinformationen der Endgeräte ausgetauscht und mit Hilfe der ausgetauschten LAN-Netzadressen und LAN-Portinformationen werden die Informationen zwischen den Endgeräten direkt im LAN übermittelt. Hierbei wird vorteilhaft davon ausgegangen, dass die eine WAN-Netzadresse jeweils einem LAN zugeordnet ist und bei Feststellen der gleichen WAN-Adresse sowohl das rufende als auch das gerufene IP-Endgerät sich im gleichen LAN befinden bzw. an das gleiche LAN angeschlossen sind.

Ein wesentlicher Vorteil der Erfindung ist darin zu sehen, dass durch den Austausch der LAN-Netzadressen und der LAN-Portadressen in einem wiederholten Signalisierungsabschnitt der Transport der Multimediadaten direkt von IP-Endgerät zu IP-Endgerät ohne Vermittlung durch einen Router und einer damit verbundenen Adressentransformation in einem Router erfolgt. Hierdurch wird sowohl das jeweilige LAN als auch der Router erheblich dynamisch entlastet, da zwischen den IP-Endgeräten zu transportierende Multimediainformationen bzw. die "Payload" nicht zuerst zum Router übertragen, von diesem vermittelt und anschließend wiederum über das LAN zum Ziel-IP-Endgerät übertragen werden müssen.

Vorteilhaft wird die Signalisierung einer Kommunikationsbeziehung mit Hilfe des SIP-Protokolls, die Signalisierungsbehandlung mit Hilfe des SDP-Protokolls und der Informationstransport bzw. der Multimediainformationstransport mit Hilfe des RTP-Protokolls durchgeführt. Das SIP-Protokoll ist vorteilhaft für die Signalisierung für einen Multimediainformationsaustausch zwischen IP-Endgeräten vorgesehen.

Weitere vorteilhafte Weiterbildungen des erfindungsgemäßen Verfahrens und eine Ausgestaltung einer erfindungsgemäßen Kommunikationsanordnung sind den weiteren Ansprüchen zu entnehmen.

Im Folgenden werden die Erfindung und die Weiterbildungen anhand einer zeichnerischen Darstellung erläutert.

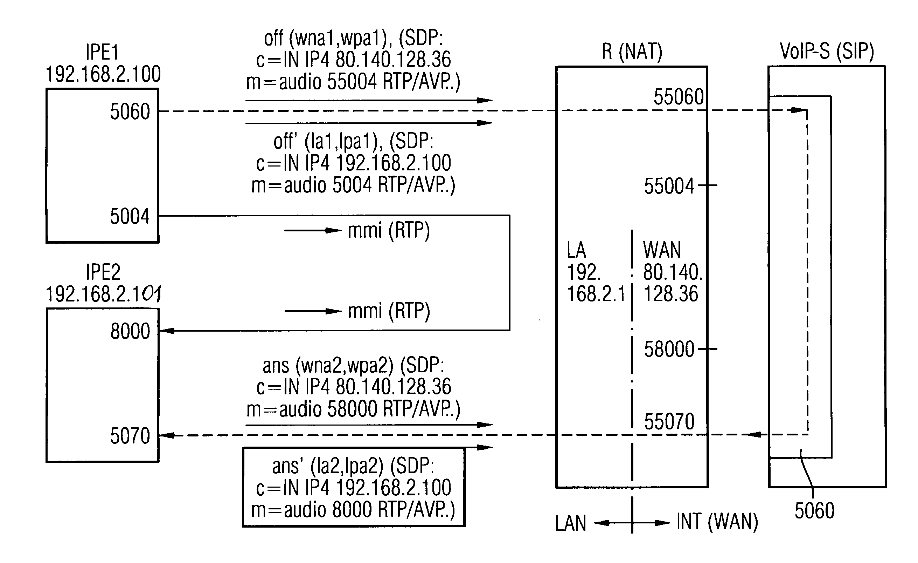

Die Figur zeigt beispielhaft zwei von mehreren nicht dargestellten IP-Endgeräten, die im Ausführungsbeispiel als IP-Telefone IPE1, IPE2 ausgestaltet sind. Die beiden IP-Telefone IPE1, IPE2 sind in einem lokalen Netz LAN (Local Area Network) mit einem Router R verbunden, wobei das lokale Netz LAN beispielsweise gemäß einem Ethernetbus ausgestaltet ist - in der Figur durch einen mit LAN bezeichneten Pfeil angedeutet und im weiteren mit LAN bezeichnet. Hierbei ist dem ersten IP-Telefon IPE1 die Internetadresse 192.168.2.100 und dem zweiten IP-Telefon IPE2 die Internetadresse 192.168.2.101 zugeordnet. Der Router R ist als Übergangseinrichtung zwischen den LAN's eines WAN vorgesehen, d.h. der Router R ist mit den weiteren LAN's des WAN direkt meist jedoch über das Internet INT verbunden - in der Figur ist das WAN einschließlich des Internet INT durch einen mit INT (WAN) bezeichneten Pfeil angedeutet. Bei einer Verbindung über das Internet INT ist der Router R mit einer ISP-Einrichtung (Internet Service Provider) des Internet verbunden - nicht dargestellt.

Für das Ausführungsbeispiel sei angenommen, dass das LAN im WAN bzw. im Internet INT mit einem VoIP-Server VoIP-S (Voice over Internetprotokoll Server) verbindbar ist, in dem mit Hilfe des SIP-Protokolls SIP (Session Initiation Protocol) der Aufbau einer Kommunikationssitzung zwischen zwei oder mehreren IP-Endgeräten IPE im WAN bewerkstelligt wird - in der Figur ist das SIP-Protokoll durch die Bezeichnung SIP angedeutet. Für den Informationsaustausch zwischen dem Router R und dem VoIP-Server SIPS werden die WAN-Netzadresse wna und zwei WAN-Portadressen wpa des Routers R verwendet. Im Ausführungsbeispiel ist der WAN-Netzadresse wna des Routers die Internetadresse 80.140.128.36 zugeordnet und für den Informationsaustausch mit der LAN-Portadresse lpa = 5060 des ersten IP-Telefons IPE1 ist die WAN-Portadresse wpa = 55060 und für den Informationsaustausch mit der LAN-Portadresse lpa = 5070 des zweiten IP-Telefons IPE2 ist die WAN-Portadresse wpa = 55070 vorgesehen. Die vorhergehend erläuterten WAN-Adressen werden im Router R durch eine NAT-Funktion (Network Address Translation) zugeteilt, wobei die NAT-Funktion im Router R für die Konvertierung der WAN-Adressen in die LAN-Adressen im LAN zuständig ist. Die WAN-Portadresse des VoIP-Servers VoIP-S ist im Ausführungsbeispiel 5060.

Zusammen mit dem SIP-Protokoll SIP wird ein SDP-Protokoll (Session Description Protocol) SDP eingesetzt, mit dessen Hilfe die Kommunikationssitzung verwaltet, und auch die Transport- und Dienste-Parameter wie beispielsweise verwendete Codes oder verwendete Transportverfahren wie RTP (Real time Protocol) ausgehandelt werden - in der Figur durch die Bezeichnung SDP angedeutet.

Der Aufbau einer Kommunikationssitzung insbesondere eine Sprach-Kommunikationssitzung vom ersten zum zweiten IP-Telefon IPE1, IPE2 wird durch eine an den Router R übermittelte Invite-Request-Nachricht eingeleitet, wobei in der Invite-Request-Nachricht die URI-Adresse (Uniform Resource Identifier) des zweiten IP-Telefons IPE2 angegeben ist - beispielsweise sip:Vorname.Name@provider.de - in der Figur nicht dargestellt. Zur Steuerung des Aufbaus der Kommunikationssitzung wird die Invite-Request-Nachricht mit der WAN-Portadresse 5060 des VoIP-Servers VoIP-S an den VoIP-Server VoIP-S weitergeleitet. Da die Kommunikationsbeziehung mit Sprachinformation über das Internet zwischen IP-Telefonen IPE1, IPE2 hergestellt werden soll, wird der Aufbau der Kommunikationsbeziehung mit dem SIP-Protokoll SIP im VoIP-Server VoIP-S gesteuert.

Mit Hilfe des VoIP-Servers VoIP-S wird die eingeleitete Kommunikationssitzung weiterbehandelt, d.h. die Invite-Request-Nachricht wird nach Auswertung der URI-Adresse mit Hilfe der WAN-Netzadresse wna 80.140.128.36 und der WAN-Portadresse wpa = 55070 des Routers R über den Router R an das zweite IP-Endgerät IPE2 vermittelt, wobei im Router R mit Hilfe der NAT-Funktion NAT die WAN-Netzadresse wna und die WAN-Portadresse wpa des zweiten IP-Endgeräts IPE2 in die LAN-Adresse la und die LAN-Portadresse lpa konvertiert werden, um die Invite-Request-Nachricht über das LAN an das zweite IPE-Endgerät IPE2 übermitteln zu können - in der Figur nicht dargestellt.

Im Rahmen des Aufbaus der Kommunikationssitzung mit Hilfe des SIP-Protokolls SIP bzw. VoIP-Servers VoIP-S wird in einem dafür vorgesehenen Protokollabschnitt eine Mitteilung off mit Hilfe des SDP-Protokolls SDP gebildet und vom ersten an das zweite IP-Endgerät IPE2 übermittelt - in der Figur durch einen Pfeil angedeutet.

In der Mitteilung off des ersten IP-Endgerätes IPE1 ist u.a. die WAN-Netzadresse wna1 = 80.140.128.36 des Routers R und eine logische WAN-Portadresse wpa1 = 55004 des Routers R angegeben - in der Figur durch die Bezeichnung wna1, wpa1 und (SDP: c=IP IP4 80.140.128.36 und m=audio 55004 RTP/AVP..) angedeutet. Mit diesen beiden Adressen sollen nach dem Aufbau der Kommunikationsbeziehung von dem zweiten an das erste IP-Endgerät IPE1 Multimediainformationen mmi - im Ausführungsbeispiel bei IP-Telefonen IPE1, IPE2 überwiegend Sprachinformationen - übertragen werden. In analoger Weise wird im zweiten IP-Endgerät IPE2 nach dem Empfang einer Mitteilung off eine Antwortmitteilung ans gebildet und an das erste IP-Endgerät IP1 übermittelt, wobei in der Antwortmitteilung ans u.a. die WAN-Netzadresse wna2 80.140.128.36 des Routers R und eine logische WAN-Portadresse wpa2 = 58000 angegeben ist - in der Figur durch die Bezeichnung wna2, wpa2 und (SDP: c=IP IP4 80.140.128.36 und m=audio 58000 RTP/AVP..) angedeutet. Mit diesen beiden Adressen sollen nach dem Aufbau der Kommunikationsbeziehung von dem ersten an das zweite IP-Endgerät IPE2 Multimediainformationen mmi - im Ausführungsbeispiel bei IP-Telefonen IPE1, IPE2 überwiegend Sprachinformationen - übertragen werden.

Bei einer Vorgehensweise ohne das erfindungsgemäße Verfahren werden für den anschließenden Austausch von Multimediainformationen mmi bzw. Sprachinformationen, obwohl sich beide IP-Telefone IPE1, IPE2 im eigenen LAN befinden, an den Router R übermittelt und in diesem mit Hilfe der angegebenen WAN-Netzadresse wna = 80.140.128.36 und der beiden logischen WAN-Portadressen wpa = 55004 und 58000 an das jeweilige IP-Telefon IPE1, IPE2 vermittelt, wobei der Router R in der Lage sein muss, die jeweiligen WAN-Netzadressen wna und die WAN-Portadressen wpa mit Hilfe der NAT-Funktion NAT in LAN-Adressen zu konvertieren. Da insbesondere für den privaten Bereich vorgesehene Router den Transport der Multimediainformationen mit WAN-Netzadressen wna und WAN-Portadressen wpa in eigenen LAN nicht unterstützen, wird vorteilhaft das erfindungsgemäße Verfahren eingesetzt.

Beim erfindungsgemäßen Verfahren werden nicht die WAN-Netzadresse wna = 80.140.128.36 und die logischen WAN-Portadressen wpa = 55004 und 58000 für den Transport der Multimediainformation mmi bzw. Sprachinformation im eigenen LAN benutzt, sondern die LAN-Netzadressen la und logische LAN-Portadressen lpa der beiden IP-Endgeräte IPE. Um dies zu erreichen, wird nach dem Übermitteln der Nachricht off und der Antwortnachricht ans im ersten und zweiten IP-Endgerät IPE1, IPE2 überprüft, ob die angegebenen WAN-Netzadressen wna1, wna2 gleich sind bzw. das gleiche LAN anzeigen. Hierzu ist zu bemerken, dass durch den Router R allen IP-Endgeräten IPE im eigenen bzw. gleichen LAN gleiche WAN-Netzadressen wna zugeordnet werden.

Sind gemäß dem Ausführungsbeispiel die WAN-Netzadressen wna1, wna2 des ersten und des zweiten IP-Endgeräts IPE1, IPE2 gleich, so sind die beiden IP-Endgeräte IPE1, IPE2 an das gleiche LAN angeschlossen. Im Ausführungsbeispiel ist in der Mitteilung off und der Antwortmitteilung ans die gleiche WAN-Netzadresse = 80.140.128.36 angegeben und somit befinden sich beide IP-Telefone IPE1, IPE2 im gleichen LAN. Nach dem Feststellen der Gleichheit der beiden WAN-Netzadressen wna1, wna2 wird der Abschnitt des Aufbaus der Kommunikationssitzung bzw. der Signalisierungsabschnitt wiederholt, in dem die Mitteilung off und die Antwortmitteilung ans ausgetauscht werden. Erfindungsgemäß wird in die weitere Mitteilung off' vom ersten IP-Endgerät IPE1 nicht die WAN-Netzadresse wna1 und die logische WAN-Portadresse wpa2, sondern die eigene LAN-Netzadresse la1 = 192.168.2.100 und die eigene logische LAN-Portadresse lpa1 = 5004 eingetragen - in der Figur durch die Bezeichnung la1, lpa1 und (SDP: c=IN IP4 192.168.2.100 und m=audio 5004 RTP/AVP..) angedeutet. Analog hierzu wird in die weitere, vom zweiten IP-Telefon IPE2 ausgegebene Antwortmitteilung ans' u.a. die eigene LAN-Netzadresse la2 = 192.168.2.101 und die eigene logische LAN-Portadresse lpa2 = 8000 angegeben - in der Figur durch die Bezeichnung la2, lpa2 und (SDP: c=IN IP4 192.168.2.100 und m=audio 8000 RTP/AVP..) angedeutet.

Nach dem Austausch der weiteren Mitteilung off' und der Antwortmitteilung ans' bzw. nach dem Aufbau der Kommunikationssitzung zwischen dem ersten und dem zweiten IP-Endgrät IPE1, IPE2 werden die Multimediainformationen mmi bzw. die Sprachinformationen mit den LAN-Netzadressen la1,la2 = 192.168.2.100, 192.168.2.101 und den logischen LAN-Portadressen lpa1, lpa2 = 5004, 8000 übermittelt. Dies bedeutet, dass die Multimediainformationen mmi nicht über den Router R und die logischen WAN-Portadresse wpa1 = 55004, wpa2 = 58000 übertragen werden müssen, sondern direkt vom jeweiligen IP-Endgerät IPE1, IPE2 über das LAN - insbesondere bei busförmigen LAN's - an das jeweils andere IP-Endgerät IPE2, IPE1 übertragen werden - in der Figur durch eine mit mmi (RTP) bezeichnete Linie angedeutet.

Da die Multimediainformationen mmi bzw. Sprachinformationen nicht mehr zum Router R und von diesem nach einer Vermittlung an das jeweilige IP-Endgerät IPE1, IPE2 übertragen müssen, wird sowohl eine erhebliche Entlastung des Routers R als auch eine erhebliche Reduzierung des Multimediaverkehrs auf dem LAN erreicht.

Für die Übertragung der Multimediainformationen mmi bzw. Sprachinformationen wird vorteilhaft das weit verbreitete RTP-Protokoll (Real Time Protocol) eingesetzt, wobei das RTP-Protokoll auch auf das H.323 Protokoll bezogen ist. Zur Unterscheidung der Medien unterscheidet das RTP-Protokoll zwischen verschiedenen Codierungsformaten, so dass die übertragenen Daten anwendungsunabhängig verwendet werden können. Für diesen Zweck wurden verschiedene RTP-Profile für Audio und Video definiert. Das RTP-Protokoll ist unabhängig von den darunter liegenden Protokollen, es wird in der Regel mit dem UDP- Protokoll (User Data Protocol) betrieben, wobei die RTP-Datenpakete in die UDP-Datenpakete eingefügt werden.

Das erfindungsgemäße Verfahren ist nicht auf das Ausführungsbeispiel begrenzt, sondern kann auch mit anderen Signalisierungsverfahren wie beispielsweise H.323 eingesetzt werden, wobei die zutreffenden Protokollabschnitte wiederholt und in diese die entsprechenden LAN-Netzadressen la und die logischen LAN-Portadressen lpa einzufügen sind.

## Patentansprüche

1. Verfahren zum Transport von Multimediainformation (mmi) zwischen einem ersten und zweiten IP-orientierten Endgerät (IPE1, IPE2) in einem lokalen Netz (LAN) eines WAN,
- bei dem im Rahmen einer Signalisierung einer Kommunikationsbeziehung im WAN zwischen dem ersten und zweiten Endgerät (IPE1, IPE2) in einem Signalisierungsabschnitt jeweils eine WAN-Netzadresse (wna1, wna2) und eine logische WAN-Portadresse (wpa1, wpa2) ausgetauscht werden,
- bei dem nach einem Feststellen der das gleiche lokale Netz (LAN) anzeigenden WAN-Netzadressen (wna1, wna2) in den Endgeräten (IPE1, IPE2) eine Wiederholung des Signalisierungsabschnitts eingeleitet wird, wobei bei der Wiederholung des Signalisierungsabschnitts die LAN-Netzdressen (la1, la2) und logischen LAN-Portadressen (lpa1, lpa2) der Endgeräte (IPE1, IPE2) ausgetauscht werden, und
- bei dem mit Hilfe der ausgetauschten LAN-Netzadressen (la1, la2) und der logischen LAN-Portadressen (lpa1, lpa2) die Multimedianformation (mmi) zwischen den Endgeräten (IPE1, IPE2) direkt im lokalen Netz (LAN) übermittelt werden.

2. Verfahren nach Anspruch 1, **dadurch gekennzeichnet,**
**dass** in dem Signalisierungsabschnitt von einem ersten Endgerät (IPE1) eine Mitteilung (off) mit ihrer WAN-Netzadresse (wna1) und logischen WAN-Portadresse (wpa1) an das zweite Endgerät (IPE2) vermittelt und von diesem eine Antwortmitteilung (ans) mit ihrer WAN-Netzadresse (wna1) und logischen WAN-Portadresse (wpa1) an das zweite IP-Endgerät (IPE2) vermittelt wird, und
**dass** nach einem Feststellen der das gleiche lokale Netz (LAN) anzeigende WAN-Netzadressen (wna1, wna2) in den beiden IP-Endgeräten (IPE1, IPE2) bei einer Wiederholung des Signalisierungsabschnitts von dem ersten IP-Endgerät (IP1) eine weitere Mitteilung (off') mit der eigenen LAN-Netzadresse (la1) und der eigenen logischen LAN-Portadresse (lpa1) an das zweite IP-Endgerät (IPE2) vermittelt und von diesem eine Antwortmitteilung (ans') mit der eigenen LAN-Netzadresse (la2) und der eigenen logischen LAN-Portadresse (lpa2) an das erste IP-Endgerät (IPE1) vermittelt wird.

3. Verfahren nach Anspruch 1 oder 2, **dadurch gekennzeichnet, dass**
- die Signalisierung einer Kommunikationsbeziehung mit Hilfe des SIP-Protokolls (SIP),
- die Signalisierungsbehandlung mit Hilfe des SDP-Protokolls (SDP) und
- der Informationstransport mit Hilfe des RTP-Protokolls (RTP) durchgeführt wird.

4. Verfahren nach Anspruch 3, **dadurch gekennzeichnet,**
**dass** die Signalisierung einer Kommunikationsbeziehung im lokalen Netz (LAN) von einem Endgerät (IPE1, IPE2) zu einem Router (R) eingeleitet und von diesem zu einem VoIP-Server (VoIP-S) mit SIP-Protokoll (SIP) im Internet (INT) gesteuert wird, wobei mit Hilfe des VoIP-Servers (VoIP-S) der Aufbau einer Kommunikationsbeziehung zwischen Endgeräten (IPE1, IPE2) gesteuert wird.

5. Verfahren nach Anspruch 1 oder 2, **dadurch gekennzeichnet, dass** die Signalisierung einer Kommunikationsbeziehung mit Hilfe des H.323-Protokolls erfolgt.

6. Verfahren nach einem der Ansprüche 1 bis 5, **dadurch gekennzeichnet,**
**dass** die WAN-Netzadresse (wna1, wna2) und LAN-Netzdresse (la1, la2) durch eine Internetadresse gebildet ist und eine logische WAN-Portadresse (wpa1, wpa2) durch eine WAN-seitige Portadresse eines Routers (R) und eine logische LAN-Portadresse (lpa1, lpa2) durch eine Portadresse des jeweiligen Endgeräts (IPE1, IP2) im lokalen Netz (LAN) repräsentiert ist.

7. Kommunikationsanordnung zum Transport von Multimediainformation zwischen einem ersten und zweiten IP-orientierten Endgerät (IPE1, IPE2) in einem lokalen Netz (LAN) eines WAN,
- mit einem Signalisierungsserver (VoIP-S) zum Austausch jeweils einer WAN-Netzadresse (wna1, wna2) und logischen WAN-Portadresse (wpa1, wpa2) zwischen dem ersten und zweiten Endgerät in einem Signalisierungsabschnitt im Rahmen der Signalisierung einer Kommunikationsbeziehung, und
- mit dem ersten und zweiten Endgerät (IPE1, IPE2), derart ausgestaltet, dass nach einem Feststellen der das gleiche lokale Netz (LAN) anzeigenden WAN-Netzadresse (wna1, wna2) in den IP-Endgeräten (IPE1, IPE2) die Wiederholung des Signalisierungsabschnitts eingeleitet wird, wobei beim Wiederholen des Signalisierungsabschnitts die LAN-Netzadressen (la1, la2) und logischen LAN-Portadressen (lpa1, lpa2) der IP-Endgeräte (IPE1, IPE2) ausgetauscht werden und mit Hilfe der ausgetauschten LAN-Netzadressen (lpa1, lpa2) und der logischen LAN-Portadressen (lpa1, lpa2) die Multimediainformationen (mmi) zwischen den IP-Endgeräten (IPE1, IPE2) im lokalen Netz (LAN) direkt übermittelt werden.

8. Kommunikationsanordnung nach Anspruch 7, **dadurch gekennzeichnet,**
**dass** ein Signalisierungsserver (VoIP-S) und die IP-orientierten Endgeräte (IPE1, IPE2) derart ausgestaltet sind,
**dass** in dem Signalisierungsabschnitt von dem ersten Endgerät (IPE1) eine Mitteilung (off) über die eigene WAN-Netzadresse (wna1) und logische WAN-Portadresse (wpa1) über den Signalisierungsserver (SIPS) an das zweite Endgerät (IPE2) vermittelt und von diesem eine Antwortmitteilung (ans) mit der eigenen WAN-Netzadresse (wna2) und logische WAN-Portadresse (wpa2) über den Signalisierungsserver (VoIP-S) an das erste Endgerät (IPE1) vermittelt wird, und
**dass** nach einem Feststellen der gleichen WAN-Netzadressen (wna1, wna2) in den beiden IP-Endgeräten (IPE1, IPE2) bei einer Wiederholung des Signalisierungsabschnitt vom ersten Endgerät (IPE1) eine Mitteilung off' über die eigene LAN-Netzadresse (la1) und LAN-Portadresse (lpa1) an das zweite Endgerät (IPE2) vermittelt und von diesem eine Antwortmitteilung (ans') mit der eigenen LAN-Netzadresse (la2) und LAN-Portadresse (lpa2) über den Signalisierungsserver (VoIP-S) an das erste Endgerät (IPE1) vermittelt wird.

9. Kommunikationsanordnung nach einem der Ansprüche 7 oder 8, **dadurch gekennzeichnet,**
**dass** zwischen dem lokalen Netz (LAN) und dem weiteren WAN ein Router (R) eingefügt und derart ausgestaltet ist, dass über den Router (R) die Signalisierung für die Kommunikationsbeziehung geführt wird, wobei dem Router (R) die gleichen WAN-Netzadressen (wna1, wna2) und für jedes der beiden Endgeräte (IPE1, IPE2) eine logische WAN-Portadresse (wpa1, wpa2) zugeordnet ist und für die Konvertierung der WAN-Adressen in LAN-Adressen eine NAT-Funktion (NAT) vorgesehen ist.

10. Kommunikationsanordnung nach einem der Ansprüche 7 bis 9, **dadurch gekennzeichnet,**
**dass** für den Signalisierungsserver (VoIP-S) ein VoIP-Server (VoIP-S) mit einem SIP-Protokoll (SIP) oder einem H.323-Protokoll vorgesehen ist und die Endgeräte (IPE1, IPE2) durch Endgeräte mit SIP- oder H.323-Protokoll realisiert sind.

## Claims

1. Method for the transportation of multimedia information (mmi) between a first and a second IP-oriented terminal (IPE1, IPE2) in a local area network (LAN) of a WAN,
- in which a WAN network address (wna1, wna2) and a logical WAN port address (wpa1, wpa2) are respectively interchanged in the course of signalling of a communication relationship in the WAN between the first and second terminals (IPE1, IPE2) in a signalling section,
- in which repetition of the signalling section is initiated after establishment of the WAN network addresses (wna1, wna2) indicating the same local area network (LAN) in the terminals (IPE1, IPE2), wherein the repetition of the signalling section involves the LAN network addresses (la1, la2) and logical LAN port addresses (lpa1, lpa2) of the terminals (IPE1, IPE2) being interchanged, and
- in which the interchanged LAN network addresses (la1, la2) and the logical LAN port addresses (lpa1, lpa2) are used to transmit the multimedia information (mmi) between the terminals (IFE1, IPE2) directly in the local area network (LAN).

2. Method according to Claim 1, **characterized in that** in the signaling section a first terminal (IFE1) conveys a message (off) with its WAN network address (wna1) and logical WAN port address (wpa1) to the second terminal (IPE2), and the latter conveys a response message (ans) with its WAN network address (wna1) and logical WAN port address (wpa1) to the second IP terminal (IPE2), and
**in that** after establishment of the WAN network addresses (wna1, wna2) indicating the same local area network (LAN) in the two IP terminals (IPE1, IPE2), repetition of the signalling section involves the first IP terminal (IP1) conveying a further message (off') with its own LAN network address (la1) and its own logical LAN port address (lpa1) to the second IP terminal (IPE2) and the latter conveying a response message (ans') with its own LAN network address (la2) and its own logical LAN port address (lpa2) to the first IP terminal (IPE1).

3. Method according to Claim 1 or 2, **characterized in that**
- the signalling of a communication relationship is performed using the SIP protocol (SIP),
- the signalling handling is performed using the SDP protocol (SDP), and
- the information transportation is performed using the RTP protocol (RTP).

4. Method according to Claim 3, **characterized in that** the signalling of a communication relationship in a local area network (LAN) from a terminal (IPE1, IPE2) to a router (R) is initiated and from the latter to a VoIP server (VoIP-S) is controlled using the SIP protocol (SIP) on the Internet (INT), wherein the VoIP server (VoIP-S) is used to control the setup of a communication relationship between terminals (IPE1, IPE2).

5. Method according to Claim 1 or 2, **characterized in that** a communication relationship is signalled using the H.323 protocol.

6. Method according to one of Claims 1 to 5, **characterized in that** the WAN network address (wna1, wna2) and LAN network address (la1, la2) are formed by an Internet address, and a logical WAN port address (wpa1, wpa2) is represented by a WAN-based port address of a router (R), and a logical LAN port address (lpa1, lpa2) is represented by a port address of the respective terminal (IPE1, IPE2) in the local area network (LAN).

7. Communication arrangement for the transportation of multimedia information between a first and a second IP-oriented terminal (IPE1, IPE2) in a local area network (LAN) of a WAN,
- having a signalling server (VoIP-S) for the interchange of a respective WAN network address (wna1, wna2) and logical WAN port address (wpa1, wpa2) between the first and second terminals in a signalling section in the course of the signalling of a communication relationship, and
- having the first and second terminals (IPE1, IPE2), designed such that the repetition of the signalling section is initiated after establishment of the WAN network address (wna1, wna2) indicating the same local area network (LAN) in the IP terminals (IPE1, IPE2), wherein the repetition of the signalling section involves the LAN network addresses (la1, la2) and logical LAN port addresses (lpa1, lpa2) of the IP terminals (IPE1, IPE2) being interchanged and the interchanged LAN network addresses (lpa1, lpa2) and the logical LAN port addresses (lpa1, lpa2) being used to transmit the multimedia information (mmi) between the IP terminals (IPE1, IPE2) in the local area network (LAN) directly.

8. Communication arrangement according to Claim 7, **characterized**
**in that** a signalling server (VcIP-S) and the IP-oriented terminals (IPE1, IPE2) are designed such that in the signalling section the first terminal (IPE1) conveys a message (off) using its own WAN network address (wna1) and logical WAN port address (wpa1) via the signalling server (SIPS) to the second terminal (IPE2) and the latter conveys a response message (ans) with its own WAN network address (wna2) and logical WAN port address (wpa2) via the signalling server (VoIP-S) to the first terminal (IPE1), and
**in that** after establishment of the same WAN network addresses (wna1, wna2) in the two IP terminals (IPE1, IPE2), repetition of the signalling section involves the first terminal (TPE1) conveying a message (off') using its own LAN network address (la1) and LAN port address (lpa1) to the second terminal (IPE2) and the latter conveying a response message (ans') with its own LAN network address (la2) and LAN port address (lpa2) via the signalling server (VoIP-S) to the first terminal (IPE1).

9. Communication arrangement according to one of Claims 7 and 8, **characterized in that** the local area network (LAN) and the further WAN have a router (R) inserted between them which is designed such that the router (R) is used to route the signalling for the communication relationship, wherein the router (R) has the same WAN network addresses (wna1, wna2) and, for each of the two terminals (IPE1, IPE2), a logical WAN port address (wpa1, wpa2) associated with it, and a NAT function (NAT) is provided for the conversion of the WAN addresses into LAN addresses.

10. Communication arrangement according to one of Claims 7 to 9, **characterized in that** a VoIP server (VoIP-S) with an SIP protocol (SIP) or an H.323 protocol is provided for the signalling server (VoIP-S), and the terminals (IPE1, IPE2) are implemented by terminals with an SIP or H.323 protocol.

## Revendications

1. Procédé de transport d'informations multimédia (mmi) entre un premier et un second terminal orienté IP (IPE1, IPE2) dans un réseau local (LAN) d'un WAN,
- selon lequel, dans le cadre d'une signalisation d'une liaison de communication dans le WAN entre le premier et le second terminal orienté IP (IPE1, IPE2), on échange dans une partie de signalisation à chaque fois une adresse de réseau WAN (wna1, wna2) et une adresse de port WAN logique (wpa1, wpa2),
- selon lequel, après avoir constaté dans les terminaux (IPE1, IPE2) des adresses de réseau WAN (wna1, wna2) indiquant le même réseau local (LAN), on déclenche une répétition de la partie de signalisation, les adresses de réseau LAN (la1, la2) et des adresses de port LAN logiques (lpa1 lpa2) des terminaux (IPE1, IPE2) étant échangées lors de la répétition de la partie de signalisation,
- et selon lequel, à l'aide des adresses de réseau LAN (la1, la2) échangées et des adresses de port LAN logiques (lpa1, lpa2), on transmet les informations multimédia (mmi) entre les terminaux (IPE1, IPE2) directement dans le réseau local (LAN).

2. Procédé selon la revendication 1, **caractérisé en ce que**
- dans la partie de signalisation, un premier terminal (IPE1) transmet un message (off) avec son adresse de réseau WAN (wna1) et son adresse de port WAN logique (wpa1) au second terminal (IPE2) et celui-ci transmet un message de réponse (ans) avec son adresse de réseau WAN (wna2) et son adresse de port WAN logique (wpa2) au premier terminal IP (IPE1)
- et, après avoir constaté dans les deux terminaux
IP (IPE1, IPE2) des adresses de réseau WAN (wna1, wna2) indiquant le même réseau local (LAN), lors d'une répétition de la partie de signalisation, le premier terminal IP (IPE1) transmet un autre message (off") avec sa propre adresse de réseau LAN (la1) et sa propre adresse de port LAN logique (lpa1) au second terminal IP (IPE2) et celui-ci transmet un message de réponse (ans') avec sa propre adresse de réseau LAN (la2) et sa propre adresse de port LAN logique (lpa2) au premier terminal IP (IPE1).

3. Procédé selon la revendication 1 ou 2, **caractérisé en ce que**
- la signalisation d'une liaison de communication s'effectue à l'aide du protocole SIP (SIP),
- le traitement de signalisation s'effectue à l'aide du protocole SDP (SDP) et
- le transport d'information s'effectue à l'aide du protocole RTP (RTP).

4. Procédé selon la revendication 3, **caractérisé en ce que** la signalisation d'une liaison de communication dans le réseau local (LAN) est déclenchée par un terminal (IPE1, IPE2) vers un routeur (R) et est ccmmandée par ce dernier vers un serveur VoIP (VoIP-S) avec protocole SIP (SIP) sur Internet (INT), l'établissement d'une liaison de communication entre les terminaux (IPE1, IPE2) étant commandé à l'aide du serveur VoIP (VoIP-S).

5. Procédé selon la revendication 1 ou 2, **caractérisé en ce que** la signalisation d'une liaison de communication s'effectue à l'aide du protocole H.323.

6. Procédé selon l'une des revendications 1 à 5, **caractérisé en ce que** l'adresse de réseau WAN (wna1, wna2) et l'adresse de réseau LAN (la1, la2) sont formées par une adresse Internet et **en ce qu'**une adresse de port WAN logique (wpa1, wpa2) est représentée par une adresse de port côté WAN d'un routeur (R) et une adresse de port LAN logique (lpa1, lpa2) par une adresse de port du terminal respectif (IPE1, IPE2) dans le réseau local (LAN).

7. Dispositif de communication pour le transport d'informations multimédia entre un premier et un second terminal orienté IP (IPE1, IPE2) dans un réseau local (LAN) d'un WAN,
- avec un serveur de signalisation (VoIP-S) pour l'échange à chaque fois d'une adresse de réseau WAN (wna1, wna2) et d'adresses de port WAN logiques (wpa1, wpa2) entre le premier et le second terminal dans une partie de signalisation dans le cadre de la signalisation d'une liaison de communication, et
- avec le premier et le second terminal (IPE1, IPE2) conçus de telle sorte que, après avoir constaté dans les terminaux IP (IPE1, IPE2) l'adresse de réseau WAN (wna1, wna2) indiquant le même réseau local (LAN), la répétition de la partie de signalisation est déclenchée, les adresses de réseau LAN (la1, la2) et des adresses de port LAN logiques (lpa1, lpa2) des terminaux IP (IPE1, IPE2) étant échangées lors de la répétition de la partie de signalisation, et les informations multimédia (mmi) étant transmises entre les terminaux (IPE1, IPE2) directement dans le réseau local (LAN) à l'aide des adresses de réseau LAN (la1, la2) échangées et des adresses de port LAN logiques (lpa1, lpa2).

8. Dispositif de communication selon la revendication 7, **caractérisé en ce qu'**un serveur de communication (VoIP-S) et les terminaux orientés IP (IPE1, IPE2) sont conçus de telle sorte que
- dans la partie de signalisation, le premier terminal (IPE1) transmet un message (off) par l'intermédiaire de sa propre adresse de réseau WAN (wna1) et de sa propre adresse de port WAN logique (wpa1) via le serveur de signalisation (SIPS) au second terminal (IPE2) et celui-ci transmet un message de réponse (ans) avec sa propre adresse de réseau WAN (wna2) et sa propre adresse de port WAN logique (wpa2) via le serveur de signalisation (VoIP-S) au premier terminal IP (IPE1)
- et, après avoir constaté dans les deux terminaux IP (IPE1, IPE2) des adresses de réseau WAN (wna1, wna2) identiques, lors d'une répétition de la partie de signalisation, le premier terminal IP (IPE1) transmet un autre message (off') par l'intermédiaire de sa propre adresse de réseau LAN (la1) et de sa propre adresse de port LAN (lpa1) au second terminal IP (IPE2) et celui-ci transmet un message de réponse (ans') avec sa propre adresse de réseau LAN (la2) et sa propre adresse de port LAN (lpa2) via le serveur de signalisation (VoIP-S) au premier terminal IP (IPE1).

9. Dispositif de communication selon l'une des revendications 7 ou 8, **caractérisé en ce qu'**un routeur (R) est inséré entre le réseau local (LAN) et le reste du WAN et est conçu de celle sorte que la signalisation pour la liaison de communication est effectuée via le routeur (R), les mêmes adresses de réseau WAN (wna1, wna2) et, pour chacun des deux terminaux (IPE1, IPE2), une adresse de port WAN logique (wpa1, wpa2) étant associées au routeur (R) et une fonction NAT (NAT) étant prévue pour la conversion des adresses WAN en adresses LAN.

10. Dispositif de communication selon l'une des revendications 7 à 9, **caractérisé en ce que**, pour le serveur de signalisation (VoIP-S), il est prévu un serveur VoIP (VoIP-S) avec un protocole SIP (SIP) ou avec un protocole H.323 et **en ce que** les terminaux (IPE1, IPE2) sont réalisés par des terminaux avec protocole SIP ou H.323.
